# EUROPEAN PATENT APPLICATION

(11) **EP 4 635 835 A1**
(43) Date of publication of application: **22.10.2025**
(21) Application number: 25170576.0
(22) Date of filing: 15.04.2025
(51) Int. Cl.: B62K 15/00, B62K 3/02

(54) **FRAME WITH FOLDABLE STRUCTURE**

(30) Priority: 15.04.2024 TW 113113970
(71) Applicant: Chiang, Shang-Fon, Taipei City 105 (TW)
(72) Inventor: Chiang, Shang-Fon, Taipei City 105 (TW)
(74) Representative: Cabinet Chaillot

(57) **Abstract**

A frame with a foldable structure (100, 200, 300) includes a front wheel frame (20), a handlebar frame (30), and a foldable structure (10) including a supporting pipe (11) defined with a reference axis (L1), a movable assembly (12), a first driving rod (13), and a second driving rod (14). The front wheel frame (20) is for installing a front wheel (21) and is pivotally connected to the handlebar frame (30). The movable assembly (12) includes a first connecting member (122), a second connecting member (123), and a movable pipe (121) fitting around the supporting pipe (11) and being movable between a first position (P1) and a second position (P2) along the reference axis (L1). An end of the first driving rod (13) is pivotally connected to the supporting pipe (11). Another end of the first driving rod (13) is pivotally connected to the front wheel frame (20). An end of the second driving rod (14) is pivotally connected to the supporting pipe (11). Another end of the second driving rod (14) is installed with a rear wheel (40).

## Description

### BACKGROUND OF THE INVENTION

### Technical Field

The present invention relates generally to a frame, and more particularly to a foldable structure and a frame with a foldable structure.

### Description of Related Art

It's known that means of transportation are indispensable characters for our life. Especially, with environmental issues having been greatly promoted and healthy awareness having increased recently, because the commuting tools driven by foots could be used for reducing exhaust pollution generated by vehicles and could be used for exercise, a number of people having the commuting tools driven by foots has greatly increased relative to the past.

To conveniently carry the commuting tools and save storage space of the commuting tools, a frame with a foldable structure is applied to the commuting tool. Through the foldable structure of the frame, the commuting tools could be carried to the inside of a building or the inside of a public transportation. However, the conventional frame still has a problem that a volume shrinkage rate of the folded frame is insufficient, and a procedure for folding and unfolding the frame is complicated. As a result, inconvenient usage could occur due to wasted time, and incorrect procedure for folding and unfolding the conventional frame could cause breaking of parts of the frame or even injuries to riders during riding.

Therefore, how to provide a frame with a foldable structure which could improve the volume shrinkage rate of the folded frame and simplify the procedure for folding and unfolding the frame, is a problem needed to be solved.

### BRIEF SUMMARY OF THE INVENTION

In view of the above, the primary objective of the present invention is to provide a foldable structure a frame with a foldable structure. Through the foldable structure disposed in the frame, a volume shrinkage rate of the folded frame could be raised and a procedure for folding and unfolding the frame could be simplified.

The present invention provides a foldable structure including a supporting pipe, at least one first driving rod, at least one second driving rod, and a movable assembly, wherein the supporting pipe is defined with a reference axis passing through a middle of the supporting pipe. The at least one first driving rod is pivotally connected to the supporting pipe at a pivot part of the at least one first driving rod, wherein the pivot part of the at least one first driving rod is defined as a first pivot point. The at least one second driving rod is pivotally connected to the supporting pipe at a pivot portion of the at least one second driving rod, wherein the pivot part of the at least one second driving rod is defined as a second pivot point. The movable assembly includes a movable pipe, a first connecting member, and a second connecting member, wherein the movable pipe fits around the supporting pipe and is movable between a first position and a second position along the reference axis. Two ends of the first connecting member are respectively and pivotally connected to the movable pipe and the at least one first driving rod. Two ends of the second connecting member are respectively and pivotally connected to the movable pipe and the at least one second driving rod. Wherein when the movable pipe moves from the first position to the second position on the supporting pipe along the reference axis, the movable pipe pulls the at least one first driving rod to pivot around the first pivot point in a first rotation direction through the first connecting member and pulls the at least one second driving rod to pivot around the second pivot point in a second rotation direction through the second connecting member. The first rotation direction is opposite to the second rotation direction.

The present invention further provides a frame with a foldable structure including a front wheel frame, a handlebar frame, and a foldable structure, wherein the front wheel frame is adapted to be installed with a front wheel. The handlebar frame is connected to the front wheel frame. The foldable structure includes a supporting pipe, a movable assembly, at least one first driving rod, and at least one second driving rod, wherein the supporting pipe is defined with a reference axis passing through a middle of the supporting pipe. The movable assembly includes a movable pipe, a first connecting member, and a second connecting member, wherein the movable pipe fits around the supporting pipe and is movable between a first position and a second position along the reference axis. A first proximal end of the at least one first driving rod is pivotally connected to the supporting pipe at a pivot part of the at least one first driving rod. The pivot part of the at least one first driving rod is defined as a first pivot point. The at least one first driving rod is pivotable around the first pivot point in a first rotation direction. A first distal end of the at least one first driving rod is connected to the front wheel frame. A second proximal end of the at least one second driving rod is pivotally connected to the supporting pipe at a pivot part of the at least one second driving rod. The pivot part of the at least one second driving rod is defined as a second pivot point. The at least one second driving rod is pivotable around the second pivot point in a second rotation direction. A second distal end of the at least one second driving rod is adapted to be installed with a rear wheel.

With the aforementioned design, through the movable assembly driving the at least one first driving rod and the at least one second driving rod to pivot and the at least one first driving rod and the at least one second driving rod respectively driving the front wheel frame and the rear wheel, the foldable structure could be disposed in the frame. When the frame with the foldable structure is converted from an unfolded configuration into a folded configuration, the supporting pipe and the handlebar frame are overturned and the front wheel frame is driven by the foldable structure, so that the front wheel frame and the foldable structure are Z shape in the folded configuration and are folded between the front wheel and the rear wheel. Therefore, the volume shrinkage rate of the folded frame could be raised and the procedure for folding and unfolding the frame could be simplified.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a side view of the frame with the foldable structure in the unfolded configuration according to a first embodiment of the present invention;
FIG. 2 is a perspective view of the frame with the foldable structure in the unfolded configuration according to the first embodiment of the present invention;
FIG. 3 is a schematic view of the foldable structure in the unfolded configuration according to the first embodiment of the present invention;
FIG. 4 is a side view of the frame with the foldable structure in the folded configuration according to the first embodiment of the present invention;
FIG. 5 is a schematic view of the foldable structure in the folded configuration according to the first embodiment of the present invention;
FIG. 6 is a schematic view of the foldable structure in the folded configuration and in the unfolded configuration according to the first embodiment of the present invention;
FIG. 7 is a schematic view of a part of the frame with the foldable structure in the folded configuration and in the unfolded configuration according to the first embodiment of the present invention;
FIG. 8 is a schematic view of another part of the frame with the foldable structure in the folded configuration and in the unfolded configuration according to the first embodiment of the present invention;
FIG. 9 is a side view of the frame with the foldable structure in the unfolded configuration according to a second embodiment of the present invention;
FIG. 10 is a schematic view of a part of the frame with the foldable structure in the unfolded configuration according to the second embodiment of the present invention;
FIG. 11 is a side view of the frame with the foldable structure in the folded configuration according to the second embodiment of the present invention;
FIG. 12 is a schematic view of a part of the frame with the foldable structure in the folded configuration according to the second embodiment of the present invention;
FIG. 13 is a side view of the frame with the foldable structure in the unfolded configuration according to a third embodiment of the present invention; and
FIG. 14 is a side view of the frame with the foldable structure in the folded configuration according to the third embodiment of the present invention.

### DETAILED DESCRIPTION OF THE INVENTION

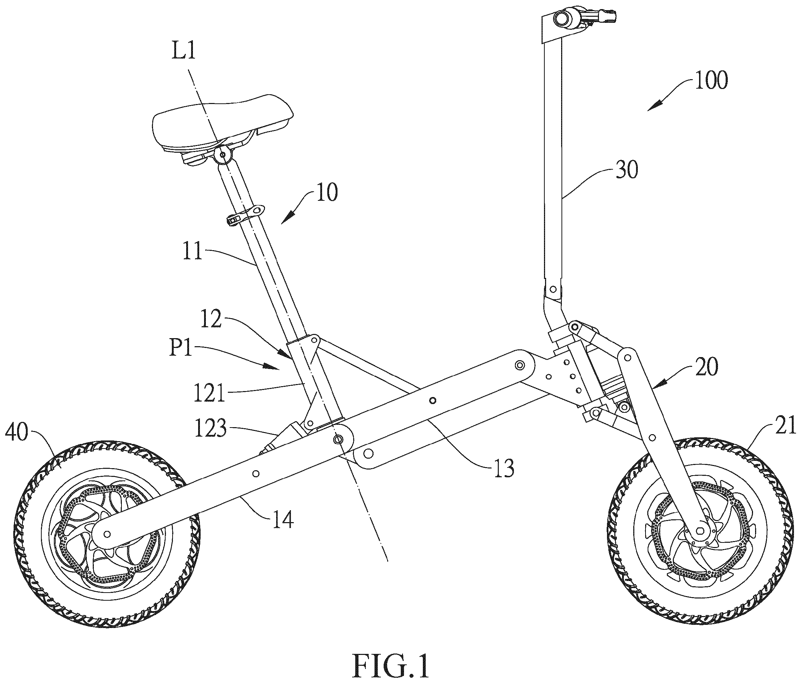

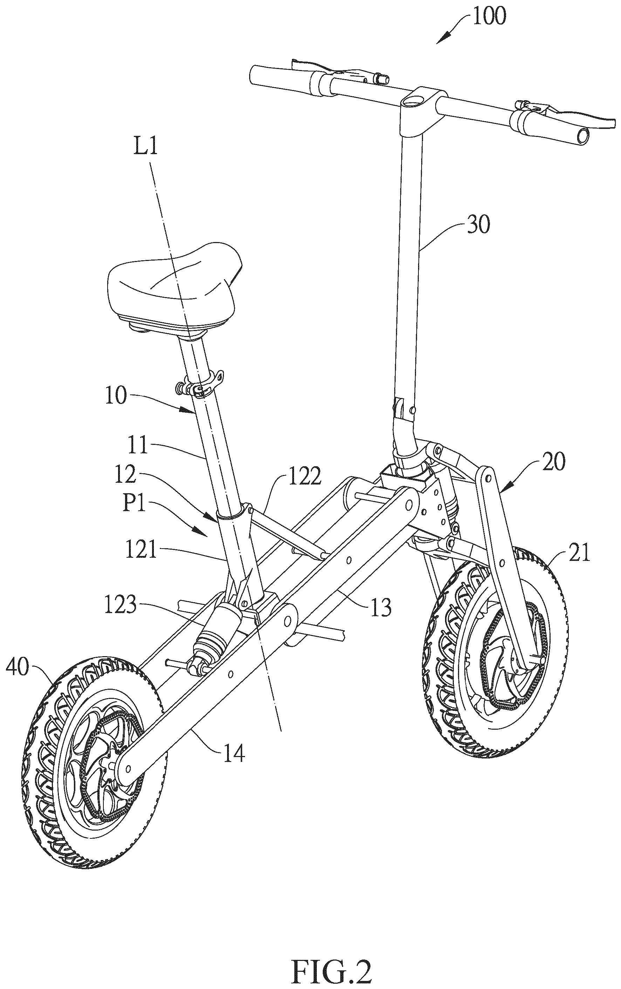

A frame with a foldable structure 100 according to a first embodiment of the present invention is illustrated in FIG. 1 and FIG. 2. In the below description, a foldable structure 10 is illustrated before the structure of the frame with the foldable structure 100 is illustrated. When the frame with the foldable structure 100 is unfolded, the frame with the foldable structure 100 is in an unfolded configuration. When the frame with the foldable structure 100 is folded, the frame with the foldable structure 100 is in a folded configuration.

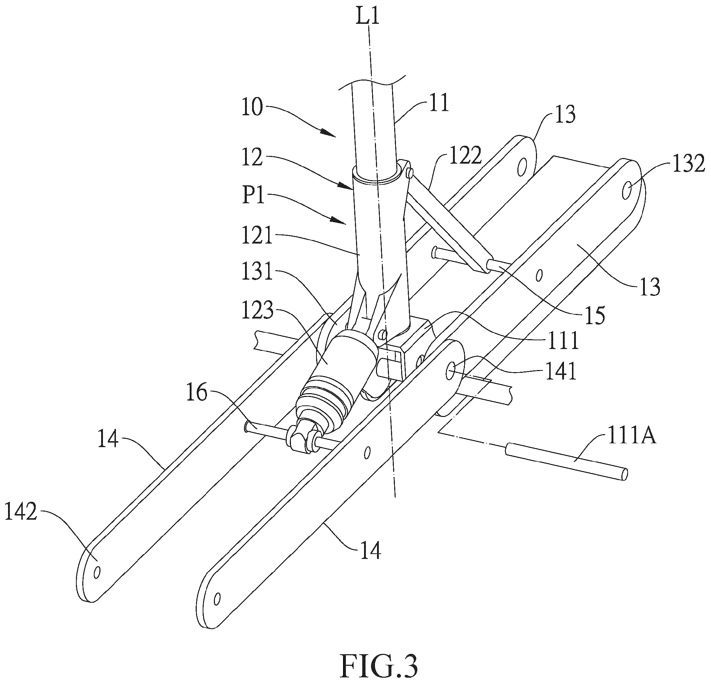

Referring to FIG. 3, the foldable structure 10 includes a supporting pipe 11, at least one first driving rod 13, at least one second driving rod 14, and a movable assembly 12, wherein the supporting pipe 11 is defined with a reference axis L1 passing through a middle of the supporting pipe 11. A pivot portion is disposed at an end of the supporting pipe 11. In the current embodiment, the pivot portion is a base 111. The at least one first driving rod 13 has a first proximal end 131 and a first distal end 132. The at least one second driving rod 14 has a second proximal end 141 and a second distal end 142. The at least one first driving rod 13 is pivotally connected to the supporting pipe 11 at a pivot part of the at least one first driving rod 13. The pivot part of the at least one first driving rod 13 is defined as a first pivot point. The at least one second driving rod 14 is pivotally connected to the supporting pipe 11 at a pivot part of the at least one second driving rod 14. The pivot part of the at least one second driving rod 14 is defined as a second pivot point. In the current embodiment, a pin 111A passes between the first proximal end 131, the second proximal end 141, and the base 111 and the first pivot point and the second pivot point are located in an extending path of the pin 111A. In other words, the at least one first driving rod 13 and the at least one second driving rod 14 are pivotally connected to the base 111 of the supporting pipe 11 in a coaxial manner. In other embodiments, the first pivot point and the second pivot point could correspond to the base 111 in a separate manner while the at least one first driving rod 13 and the at least one second driving rod 14 could still be pivotally connected to the base 111. In the current embodiment, a number of the at least one first driving rod 13 is two and a number of the at least one second driving rod 14 is two. In other embodiments, the number of the at least one first driving rod 13 could be one, three, or above, and the number of the at least one second driving rod 14 could be one, three, or above.

The movable assembly 12 includes a movable pipe 121, a first connecting member 122, and a second connecting member 123, wherein the movable pipe 121 fits around the supporting pipe 11 and could move between a first position P1 and a second position P2 along the reference axis L. The first position P1 is lower than the second position P2. When the movable pipe 121 is located at the first position P1, a bottom edge of the movable pipe 121 abuts against a top side of the base 111. A side of the movable pipe 121 is pivotally connected to the first connecting member 122. The other side of the movable pipe 121 is pivotally connected to the second connecting member 123. A first pin 15 passes between the two first driving rods 13. A part of the first connecting member 122 is located between the two first driving rods 13. The first connecting member 122 is pivotally connected to the first pin 15. A second pin 16 passes between the two second driving rods 14. A part of the second connecting member 123 is located between the two second driving rods 14. The second connecting member 123 is pivotally connected to the second pin 16.

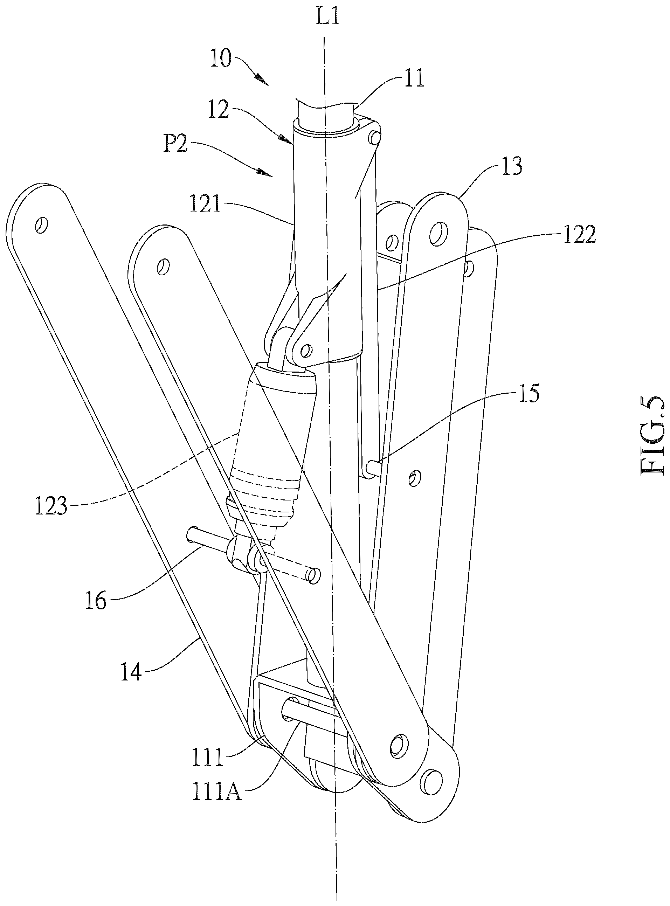

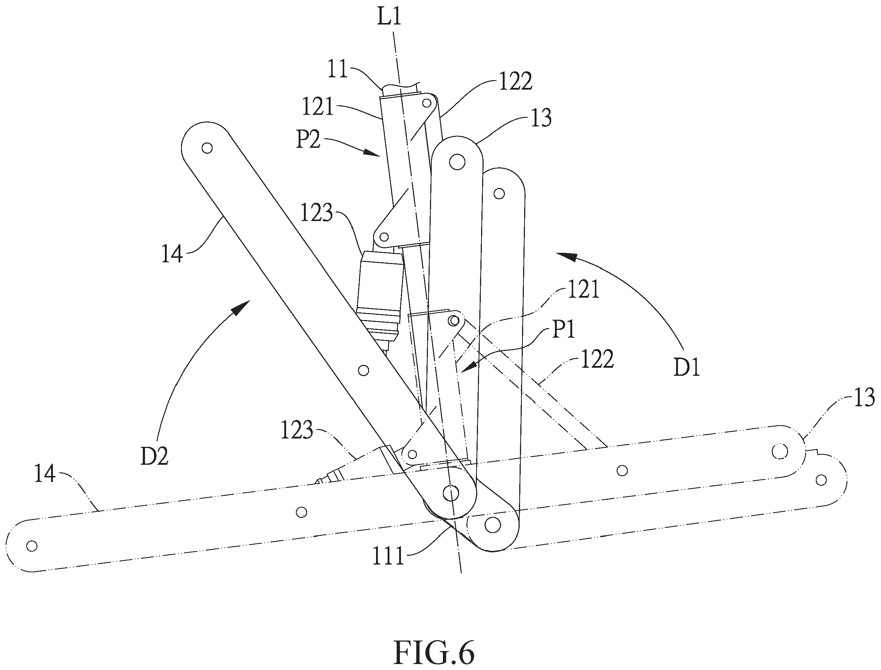

More specifically, referring to FIG. 1 to FIG. 3, when the foldable structure 10 is in the unfolded configuration, the movable pipe 121 is located at the first position P1, an obtuse angle is formed between one of the two first driving rods 13 and one of the two second driving rods 14 and an obtuse angle is formed between the other first driving rod 13 and the other second driving rod 14. Referring to FIG. 5 and FIG. 6, when the foldable structure 10 is converted from the unfolded configuration into the folded configuration, the movable pipe 121 moves from the first position P1 to the second position P2 on the supporting pipe 11 along the reference axis L1, drives the first connecting member 122 to pivot around the movable pipe 121 towards the reference axis L1 in a first rotation direction D1, and drives the second connecting member 123 to pivot around the movable pipe 121 towards the reference axis L1 in the second rotation direction D2. The first rotation direction D1 is opposite to the second rotation direction D2. The first connecting member 122 pulls the first pin 15 to move towards the reference axis L1 in the first rotation direction D1. The first pin 15 drives the two first driving rods 13 to pivot around the first pivot point in the first rotation direction D1. The second connecting member 123 pulls the second pin 16 to move towards the reference axis L1 in the second rotation direction D2. The second pin 16 drives the two second driving rods 14 to pivot around the second pivot point in the second rotation direction D2. When the foldable structure 10 is in the folded configuration, an acute angle is formed between one of the two first driving rods 13 and one of the two second driving rods 14 and an acute angle is formed between the other first driving rod 13 and the other second driving rod 14.

In the current embodiment, a location in which the first connecting member 122 is pivotally connected to the movable pipe 121 is higher than a location in which the second connecting member 123 is pivotally connected to the movable pipe 121. When the movable pipe 121 moves from the first position P1 to the second position P2, an arc length of a trajectory formed by the two first driving rods 13 pivoting around the first pivot point is greater than an arc length of a trajectory formed by the two second driving rods 14 pivoting around the second pivot point. Therefore, when the supporting pipe 11 pivots towards the two second driving rods 14 in the first rotation direction D1, i.e., the two first driving rods 13, the first pin 15, the two second driving rods 14, and the second pin 16 respectively pivot towards the reference axis L1, the first connecting member 122 and the second connecting member 123 are respectively pulled by the first pin 15 and the second pin 16 to drive the movable pipe 121 to move from the first position P1 to the second position P2. In this way, when the foldable structure 10 is in the folded configuration, the two first driving rods 13, the movable assembly 12, and the two second driving rods 14 could be folded between a front wheel 21 and a rear wheel 40, thereby reducing a folded volume of the foldable structure 10. In other embodiments, the location in which the first connecting member 122 is pivotally connected to the movable pipe 121 could be the same as or lower than the location in which the second connecting member 123 is pivotally connected to the movable pipe 121 while the first connecting member 122 and the second connecting member 123 could respectively drive the two first driving rods 13 and the two second driving rods 14 to pivot around an end of the supporting pipe 11 towards the reference axis L1.

Referring to FIG. 1, FIG. 2, FIG. 7, and FIG. 8, the frame with the foldable structure 100 is defined with a lateral axis L2 and includes a front wheel frame 20, a handlebar frame 30, and the foldable structure 10, wherein an end of the front wheel frame 20 is installed with the front wheel 21 and another end of the front wheel frame 20 is pivotally connected to the two first distal ends 132 of the two first driving rods 13. The handlebar frame 30 is pivotally connected to the front wheel frame 20. The handlebar frame 30 could pivot around still another end of the front wheel frame 20 in the second rotation direction D2. The two second distal ends 142 of the two second driving rods 14 are installed with the rear wheel 40. The front wheel 21 and the rear wheel 40 are arranged along the lateral axis L2. In the current embodiment, the frame with the foldable structure 100 could be applied to, but not limited to, a bicycle or a run bike. In the current embodiment, the first connecting member 122 is a rod and the second connecting member 123 is a shock absorber. In other embodiments, the first connecting member 122 and the second connecting member 123 could be rods or shock absorbers based on the demand.

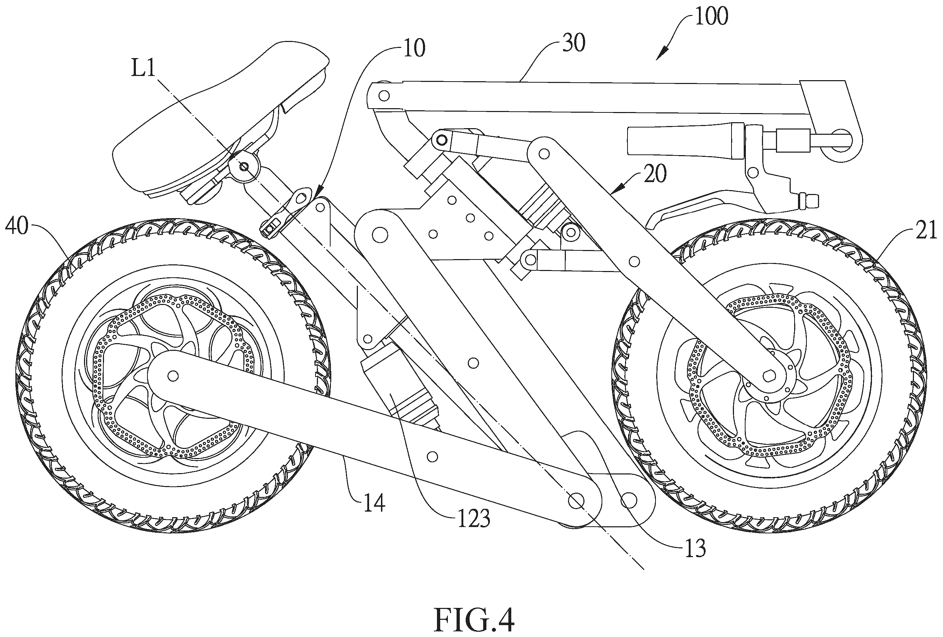

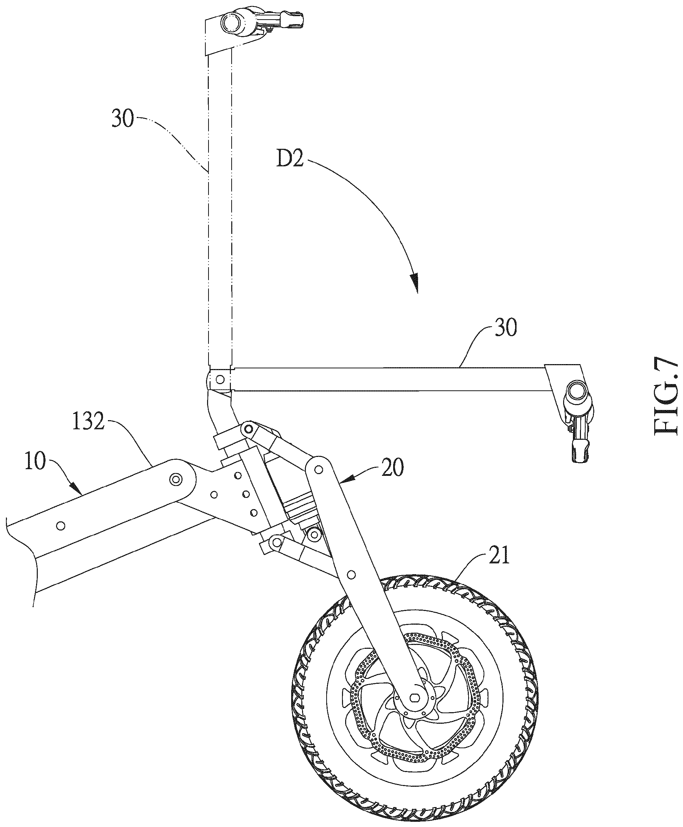

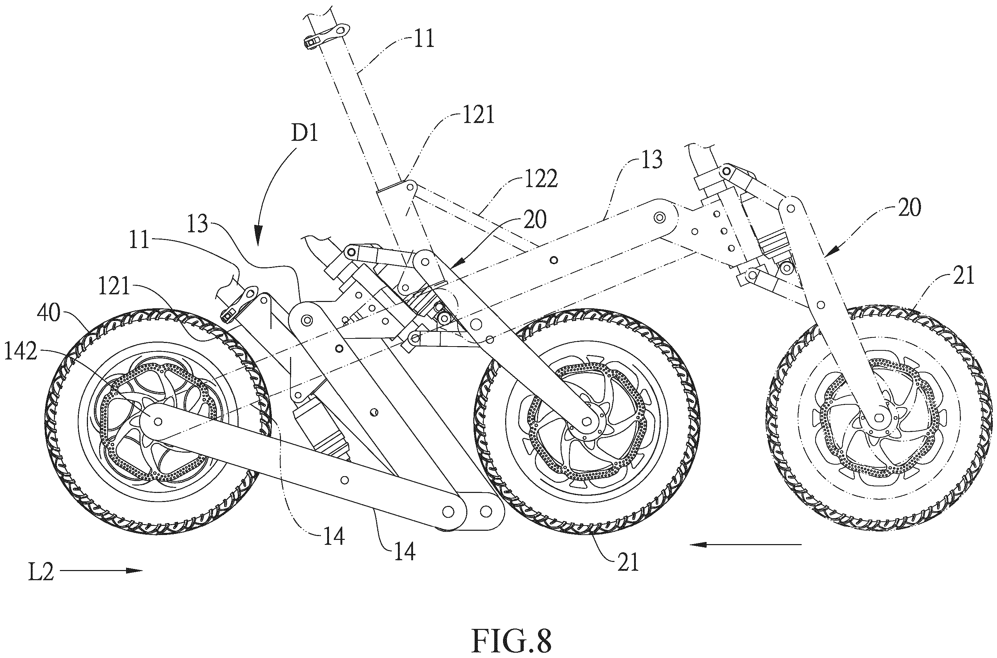

In practice, referring to FIG. 7 and FIG. 8, when the frame with the foldable structure 100 is converted from the unfolded configuration (as shown in FIG. 1 and FIG. 2) into the folded configuration (as shown in FIG. 4), the supporting pipe 11 is overturned towards the two second driving rods 14 in the first rotation direction D1; the first connecting member 122 and the second connecting member 123 are respectively pulled by the first pin 15 and the second pin 16 to drive the movable pipe 121 to move from the first position P1 to the second position P2; the front wheel frame 20 is driven by the two first driving rods 13 to move towards the reference axis L1 along the lateral axis L2, so that the front wheel frame 20 and the foldable structure 10 form a Z shape in the folded configuration. Moreover, the handlebar frame 30 is overturned around the end of the front wheel frame 20 in the second rotation direction D2. In this way, through overturning the supporting pipe 11 and the handlebar frame 30, the frame with the foldable structure 100 is converted from the unfolded configuration into the folded configuration, thereby raising a volume shrinkage rate of a folded frame and simplifying a procedure for folding and unfolding the frame.

On the contrary, when the frame with the foldable structure 100 is converted from the folded configuration (as shown in FIG. 4) into the unfolded configuration (as shown in FIG. 1 and FIG. 2), the supporting pipe 11 pivots towards the two first driving rods 13 in the second rotation direction D2; at that time, the two first driving rods 13 and the two second driving rods 14 are driven by the supporting pipe 11 to respectively pull the first connecting member 122 and the second connecting member 123 through the first pin 15 and the second pin 16; at the same time, the movable pipe 121 is driven by the first connecting member 122 and the second connecting member 123 to move from the second position P2 to the first position P1 on the supporting pipe 11 along the reference axis L1; the front wheel frame 20 is driven by the two first driving rods 13 to move away from the reference axis L1 along the lateral axis L2; and then the handlebar frame 30 pivots around the end of the front wheel frame 20 in the first rotation direction D1. In this way, the frame with the foldable structure 100 could be converted into the unfolded configuration.

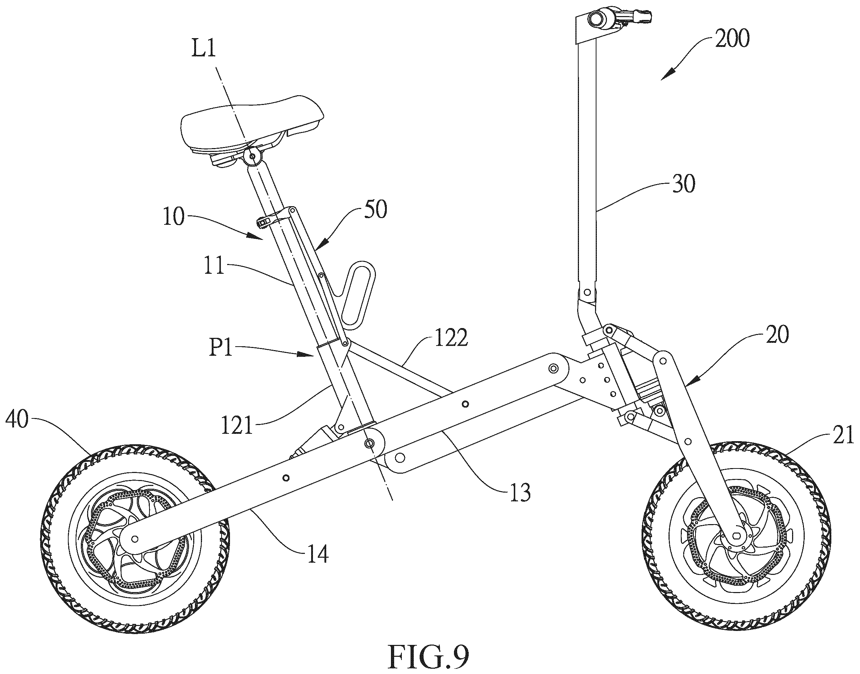

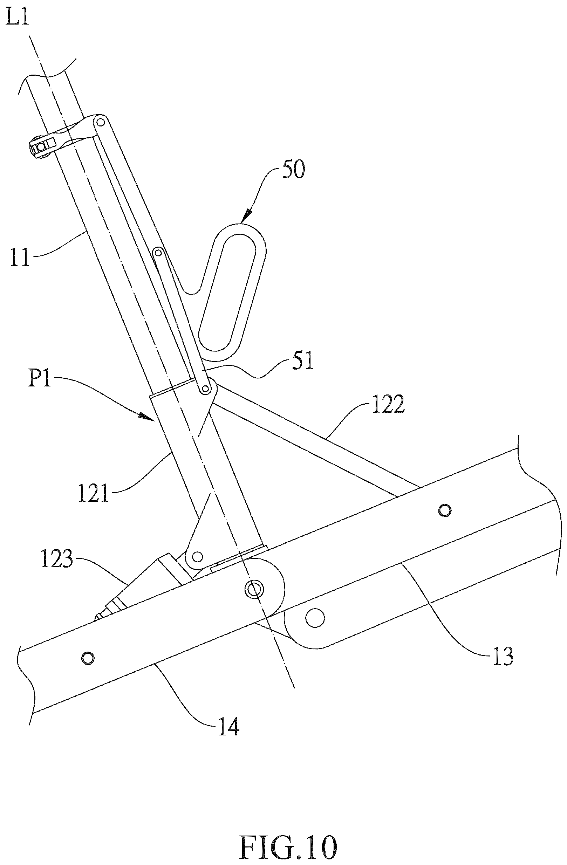

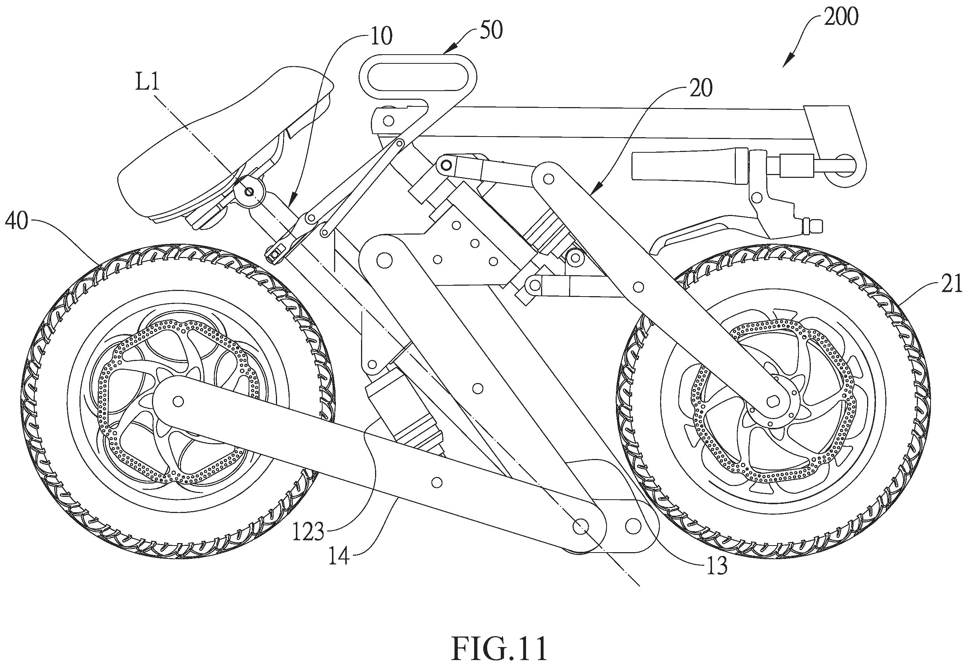

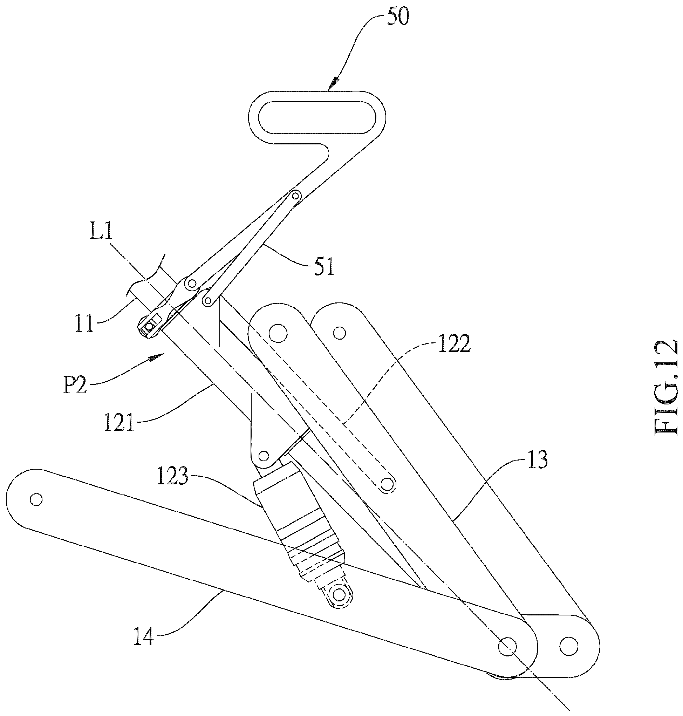

A frame with a foldable structure 200 according to a second embodiment of the present invention is illustrated in FIG. 9 to FIG. 12 and is based on the structure of the first embodiment. The frame with the foldable structure 200 further includes a first handle 50, wherein the first handle 50 is pivotally connected to the supporting pipe 11. The first handle 50 is pivotally connected to an end of a third connecting member 51 and the other end of the third connecting member 51 is pivotally connected to the movable pipe 121, so that the first handle 50 could pivot around an end of the supporting pipe 11 in the first rotation direction D1. At that time, the third connecting member 51 drives the movable pipe 121 to move from the first position P1 to the second position P2, so that the frame with the foldable structure 200 could be converted from the unfolded configuration into the folded configuration. On the contrary, when the first handle 50 pivots around the end of the supporting pipe 11 in the second rotation direction D2, the third connecting member 51 drives the movable pipe 121 to move from the second position P2 to the first position P1, so that the frame with the foldable structure 200 could be converted from the folded configuration into the unfolded configuration. In this way, based on the foldable structure 10 in the first embodiment and in the second embodiment, the first handle 50 which is pivotable in the first rotation direction D1 is provided in the second embodiment, so that the frame with the foldable structure 200 could also be converted from the unfolded configuration into the folded configuration. Therefore, the volume shrinkage rate of the folded frame could be raised and the procedure for folding and unfolding the frame could be simplified in the first embodiment and in the second embodiment.

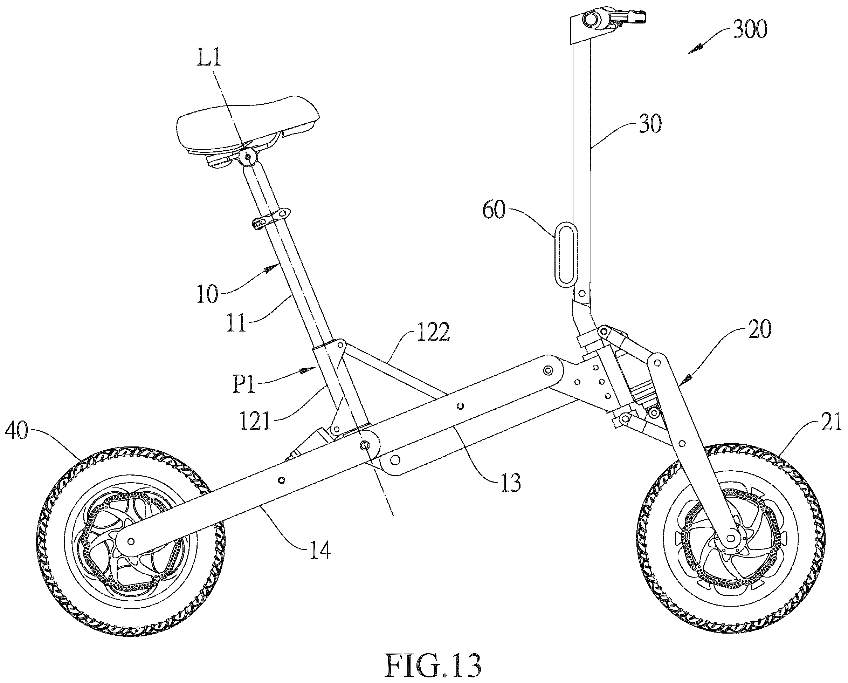

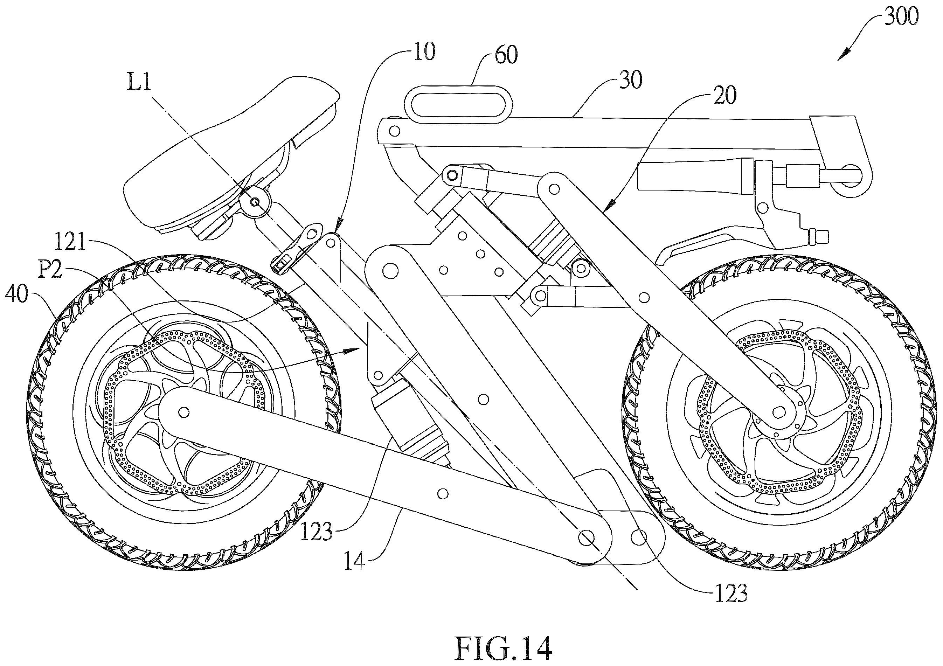

A frame with a foldable structure 300 according to a third embodiment of the present invention is illustrated in FIG. 13 and FIG. 14 and is based on the structure of the first embodiment. The frame with the foldable structure 300 further includes a second handle 60, wherein the second handle 60 is disposed on the handlebar frame 30, so that the second handle 60 could be held to drive the handlebar frame 30 to overturn around an end of the front wheel frame 20 in the second rotation direction D2. Moreover, based on the structure of the first embodiment, the supporting pipe 11 is overturned towards the two second driving rods 14 in the first rotation direction D1 to drive the movable pipe 121 to move from the first position P1 to the second position P2, so that the frame with the foldable structure 300 could be converted from the unfolded configuration into the folded configuration. On the contrary, the second handle 60 is held to drive the handlebar frame 30 to pivot around the end of the front wheel frame 20 in the first rotation direction D1. Based on the structure of the first embodiment, the supporting pipe 11 pivots towards the two first driving rods 13 in the second rotation direction D2 to drive the movable pipe 121 to move from the second position P2 to the first position P1, so that the frame with the foldable structure 300 could be converted from the folded configuration into the unfolded configuration. Therefore, the volume shrinkage rate of the folded frame could be raised and the procedure for folding and unfolding the frame could be simplified.

With the aforementioned design, the movable assembly 12 drives the at least one first driving rod 13 and the at least one second driving rod 14 to pivot to respectively drive the front wheel frame 20 and the rear wheel 40, so that the frame with the foldable structure 100,200,300 is foldable with the foldable structure 10. When the frame with the foldable structure 100,200,300 is converted from the unfolded configuration into the folded configuration, the supporting pipe 11 and the handlebar frame 30 are overturned and the front wheel frame 20 is driven by the foldable structure 10, so that the front wheel frame 20 and the foldable structure 10 form a Z shape in the folded configuration and are folded between the front wheel 21 and the rear wheel 40. Therefore, the volume shrinkage rate of the folded frame could be raised and the procedure for folding and unfolding the frame could be simplified.

It must be pointed out that the embodiments described above are only some preferred embodiments of the present invention. All equivalent structures which employ the concepts disclosed in this specification and the appended claims should fall within the scope of the present invention.

## Claims

1. A foldable structure (10), comprising:
a supporting pipe (11) defined with a reference axis (L1) passing through a middle of the supporting pipe (11);
at least one first driving rod (13) pivotally connected to the supporting pipe (11) at a pivot part of the at least one first driving rod (13), wherein the pivot part of the at least one first driving rod (13) is defined as a first pivot point;
at least one second driving rod (14) pivotally connected to the supporting pipe (11) at a pivot part of the at least one second driving rod (14), wherein the pivot part of the at least one second driving rod (14) is defined as a second pivot point; and
a movable assembly (12) comprising a movable pipe (121), a first connecting member (122), and a second connecting member (123), wherein the movable pipe (121) fits around the supporting pipe (11) and is movable between a first position (P1) and a second position (P2) along the reference axis (L1); two ends of the first connecting member (122) are respectively and pivotally connected to the movable pipe (121) and the at least one first driving rod (13); two ends of the second connecting member (123) are respectively and pivotally connected to the movable pipe (121) and the at least one second driving rod (14);
wherein when the movable pipe (121) moves from the first position (P1) to the second position (P2) on the supporting pipe (11) along the reference axis (L1), the movable pipe (121) pulls the at least one first driving rod (13) to pivot around the first pivot point in a first rotation direction (D1) through the first connecting member (122) and pulls the at least one second driving rod (14) to pivot around the second pivot point in a second rotation direction (D2) through the second connecting member (123); the first rotation direction (D1) is opposite to the second rotation direction (D2).

2. The foldable structure (10) as claimed in claim 1, wherein a location in which the first connecting member (122) is pivotally connected to the movable pipe (121) is higher than a location in which the second connecting member (123) is pivotally connected to the movable pipe (121); when the movable pipe (121) moves from the first position (P1) to the second position (P2), an arc length of a trajectory formed by the at least one first driving rod (13) pivoting around the first pivot point is greater than an arc length of a trajectory formed by the at least one second driving rod (14) pivoting around the second pivot point.

3. The foldable structure (10) as claimed in claim 1, wherein a pivot portion is disposed at an end of the supporting pipe (11); the at least one first driving rod (13) has a first proximal end (131); the at least one second driving rod (14) has a second proximal end (141); a pin (111A) passes through the first proximal end (131), the second proximal end (141), and the pivot portion; the first pivot point and the second pivot point are located in an extending path of the pin (111A).

4. The foldable structure (10) as claimed in claim 1, wherein a number of the at least one first driving rod (13) is two; a first pin (15) passes between the two first driving rods (13); a part of the first connecting member (122) is located between the two first driving rods (13); the first pin (15) is pivotally connected to the first connecting member (122); when the movable pipe (121) moves from the first position (P1) to the second position (P2), the first connecting member (122) drives the first pin (15) to move towards the reference axis (L1) and the first pin (15) drives the two first driving rods (13) to pivot around the first pivot point in the first rotation direction (D1).

5. The foldable structure (10) as claimed in claim 1, wherein a number of the at least one second driving rod (14) is two; a second pin (16) passes between the two second driving rods (14); a part of the second connecting member (123) is located between the two second driving rods (14); the second pin (16) is pivotally connected to the second connecting member (123); when the movable pipe (121) moves from the first position (P1) to the second position (P2), the second connecting member (123) drives the second pin (16) to move towards the reference axis (L1) and the second pin (16) drives the two second driving rods (14) to pivot around the second pivot point in the second rotation direction (D2).

6. A frame with a foldable structure (100, 200, 300), comprising:
a front wheel frame (20) adapted to be installed with a front wheel (21);
a handlebar frame (30) connected to the front wheel frame (20); and
a foldable structure (10) comprising a supporting pipe (11), a movable assembly (12), at least one first driving rod (13), and at least one second driving rod (14), wherein the supporting pipe (11) is defined with a reference axis (L1) passing through a middle of the supporting pipe (11); the movable assembly (12) comprises a movable pipe (121), a first connecting member (122), and a second connecting member (123), wherein the movable pipe (121) fits around the supporting pipe (11) and is movable between a first position (P1) and a second position (P2) along the reference axis (L1); a first proximal end (131) of the at least one first driving rod (13) is pivotally connected to the supporting pipe (11) at a pivot part of the at least one first driving rod (13); the pivot part of the at least one first driving rod (13) is defined as a first pivot point; the at least one first driving rod (13) is pivotable around the first pivot point in a first rotation direction (D1); a first distal end (132) of the at least one first driving rod (13) is connected to the front wheel frame (20); a second proximal end (141) of the at least one second driving rod (14) is pivotally connected to the supporting pipe (11) at a pivot part of the at least one second driving rod (14); the pivot part of the at least one second driving rod (14) is defined as a second pivot point; the at least one second driving rod (14) is pivotable around the second pivot point in a second rotation direction (D2); a second distal end (142) of the at least one second driving rod (14) is adapted to be installed with a rear wheel (40).

7. The frame with the foldable structure (100, 200, 300) as claimed in claim 6, wherein the second connecting member (123) is a shock absorber.

8. The frame with the foldable structure (100, 200, 300) as claimed in claim 6, wherein the handlebar frame (30) is pivotally connected to the front wheel frame (20) and is pivotable around an end of the front wheel frame (20) in the first rotation direction (D1) and in the second rotation direction (D2).

9. The frame with the foldable structure (100, 200, 300) as claimed in claim 6, wherein the first distal end (132) of the at least one first driving rod (13) is pivotally connected to the front wheel frame (20); when the at least one first driving rod (13) pivots around an end of the supporting pipe (11) in the first rotation direction (D1), the at least one first driving rod (13) drives the front wheel frame (20) to move towards the reference axis (L1).

10. The frame with the foldable structure (100, 200, 300) as claimed in claim 6, further comprising a first handle (50), wherein the first handle (50) is pivotally connected to the supporting pipe (11); the first handle (50) is pivotally connected to an end of a third connecting member (51) and the other end of the third connecting member (51) is pivotally connected to the movable pipe (121), so that the first handle (50) is pivotable around an end of the supporting pipe (11) in the first rotation direction (D1); when the first handle (50) pivots in the first rotation direction (D1), the third connecting member (51) drives the movable pipe (121) to move from the first position (P1) to the second position (P2).

11. The frame with the foldable structure (100, 200, 300) as claimed in claim 6, further comprising a second handle (60), wherein the second handle (60) is disposed on the handlebar frame (30) and is adapted to drive the handlebar frame (30) to pivot around an end of the front wheel frame (20) in the first rotation direction (D1) and in the second rotation direction (D2).
